(19) Europäisches Patentamt / European Patent Office / Office européen des brevets

(11) **EP 3 912 719 A1**

(12) **EUROPEAN PATENT APPLICATION**
published in accordance with Art. 153(4) EPC

(43) Date of publication:
**24.11.2021 Bulletin 2021/47**

(21) Application number: **20741884.9**

(22) Date of filing: **15.01.2020**

(51) Int Cl.:
*B01J 29/69* (2006.01)   *B01D 53/86* (2006.01)
*B01D 53/90* (2006.01)   *B01D 53/94* (2006.01)
*F01N 3/08* (2006.01)   *F01N 3/10* (2006.01)
*F01N 3/28* (2006.01)

(86) International application number:
**PCT/JP2020/001110**

(87) International publication number:
**WO 2020/149313 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2019  JP 2019004722**

(71) Applicant: **Hitachi Zosen Corporation**
**Osaka-shi, Osaka 559-8559 (JP)**

(72) Inventors:
• **SHIMIZU, Kana**
  **Osaka-shi, Osaka 559-8559 (JP)**
• **SHONO, Emi**
  **Osaka-shi, Osaka 559-8559 (JP)**
• **NISHI, Tsugumi**
  **Osaka-shi, Osaka 559-8559 (JP)**

(74) Representative: **Grünecker Patent- und**
**Rechtsanwälte**
**PartG mbB**
**Leopoldstraße 4**
**80802 München (DE)**

(54) **CATALYST FOR EXHAUST GAS PURIFICATION USE**

(57)    An exhaust gas purifying catalyst (10) is for promoting a decomposition reaction of a nitrogen oxide in an exhaust gas to which at least one of a hydrocarbon and an alcohol is added, the exhaust gas purifying catalyst including a substrate (3) having zeolite (2) and a zirconium oxide supported thereon.

FIG. 1

(a)

(b)

EP 3 912 719 A1

**Description**

Technical Field

The present invention relates to a catalyst for exhaust gas purification use (exhaust gas purifying catalyst) used to remove a nitrogen oxide in an exhaust gas.

Background Art

Selective catalytic reduction with ammonia (hereinafter, referred to as ammonia SCR) has been often employed as a method for removing a nitrogen oxide (NOx) contained in a combustion exhaust gas. The ammonia SCR is a method for adding, to the exhaust gas, ammonia as a reducing agent and making the exhaust gas in contact with a NOx removal catalyst containing vanadium or titania as a main component so as to remove the nitrogen oxide.

However, an exhaust gas discharged from, e.g., an incineration facility or a marine vessel engine has a high sulfur oxide ($SO_x$) concentration and a high nitrogen oxide concentration, and has a low temperature. For example, at a location downstream of a supercharger for an exhaust gas from a marine vessel engine, the exhaust gas has a temperature of 300°C or less. In a case where the ammonia SCR is applied under such conditions, ammonia ($NH_3$), which is a reducing agent, reacts with a sulfur oxide (SOx) to generate ammonium sulfate ($(NH_4)_2SO_4$), thereby causing a trouble(s) such as blocking of a duct and/or catalyst clogging.

Meanwhile, there has been developed a denitration technique that uses an alcohol as a reducing agent to cause a reduction reaction of a nitrogen oxide in an exhaust gas.

For example, Patent Literature 1 discloses: an exhaust gas purifying catalyst having denitration capability of removing a nitrogen oxide even in an exhaust gas containing a sulfur oxide; and a method for cleaning an exhaust gas with use of the exhaust gas purifying catalyst. The exhaust gas purifying method disclosed in Patent Literature 1 is a method for making an oxygen-excessive exhaust gas in contact with a catalyst including $\beta$ zeolite having, as a NOx removal catalyst, at least one kind of metal selected from iron, cobalt, silver, molybdenum, and tungsten supported thereon, in the presence of an ethanol and/or an isopropyl alcohol as a reducing agent. With this method, a nitrogen oxide in the exhaust gas is reduced and removed.

Citation List

[Patent Literature]

   [Patent Literature 1]
   Japanese Patent Application Publication Tokukai No. 2004-358454

Summary of Invention

Technical Problem

However, with the exhaust gas purifying method disclosed in Patent Literature 1 employing the reduction removal method involving use of the NOx removal catalyst, sufficient denitration capability cannot be achieved, unless the temperature in the reaction for purifying the exhaust gas is approximately 300°C to approximately 500°C, which is higher than the temperature (approximately 130°C to 300°C) of an exhaust gas discharged from an incineration facility or a marine vessel, disadvantageously. Furthermore, in Patent Literature 1, durability against $SO_3$, which greatly influences degradation of the catalyst when adhered to the catalyst, is not confirmed.

In consideration of these circumstances, an aspect of the present invention has an object to provide an exhaust gas purifying catalyst capable of suppressing or reducing the degree of degradation in nitrogen-oxide removal capability (in other words, an exhaust gas purifying catalyst having a high denitration capability retention rate).

Solution to Problem

In order to attain the object, an exhaust gas purifying catalyst in accordance with an aspect of the present invention is an exhaust gas purifying catalyst for promoting a decomposition reaction of a nitrogen oxide in an exhaust gas to which at least one of a hydrocarbon and an alcohol is added, the exhaust gas purifying catalyst including a substrate having zeolite and a zirconium oxide supported thereon.

Advantageous Effects of Invention

In accordance with an aspect of the present invention, it is possible to provide an exhaust gas purifying catalyst capable of suppressing or reducing the degree of degradation in nitrogen-oxide removal capability.

Brief Description of Drawings

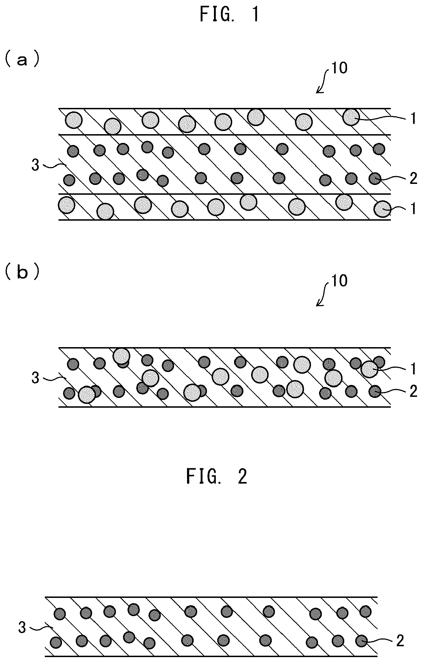

(a) and (b) of Fig. 1 are cross-sectional views illustrating a configuration of an exhaust gas purifying catalyst in accordance with an embodiment of the present invention.
Fig. 2 is a cross-sectional view illustrating a configuration of an exhaust gas purifying catalyst of a comparative example, relative to the exhaust gas purifying catalyst in accordance with the present invention.

Description of Embodiments

The following will describe an embodiment of the present invention. However, the present invention is not limited to this. Unless otherwise noted, the expression "A to B" indicating a numerical range means "not less than A and not more than B". The term "mass" is considered as a synonym of "weight".

<Exhaust gas cleaning catalyst>

(a) and (b) of Fig. 1 are cross-sectional views illustrating a configuration of an exhaust gas purifying catalyst in accordance with an embodiment of the present invention.
The exhaust gas purifying catalyst in accordance with the aspect of the present invention is an exhaust gas purifying catalyst for promoting a decomposition reaction of a nitrogen oxide in an exhaust gas to which at least one of a hydrocarbon and an alcohol is added, the exhaust gas purifying catalyst including a substrate having zeolite and a zirconium oxide supported thereon. In other words, the exhaust gas purifying catalyst in accordance with the aspect of the present invention is an exhaust gas purifying catalyst for promoting a decomposition reaction of a nitrogen oxide in an exhaust gas to which at least one of a hydrocarbon and an alcohol is added. As shown in (a) of Fig. 1, an exhaust gas purifying catalyst 10 includes a substrate 3 having zeolite 2 and a zirconium oxide 1 supported thereon. With this, the exhaust gas purifying catalyst 10 can suppress or reduce the degree of degradation of the nitrogen-oxide removal capability. In other words, it is possible to enhance the denitration capability retention rate of the exhaust gas purifying catalyst 10.
Note that a "denitration capability retention rate" is calculated according to formula (1) below.

$$\text{Denitration capability retention rate} = k \; / \; k_0 \; ... \; \text{formula (1)}.$$

Here, "k" and "$k_0$" in formula 1 are calculated according to formula (2) below. Note that the denitration rate of $k_0$ is an initial denitration rate.

$$k = -AV \times \ln(1 - \text{denitration rate}) \; ... \; \text{formula (2)}.$$

Here, "AV" in formula (2) is an areal velocity, and is calculated according to formula (3) below.

$$AV \; [\text{Nm/h}] = (\text{flow rate} \; [\text{Nm}^3/\text{h}] \; \text{of exhaust gas}) \; / \; \text{surface area} \; [\text{m}^2] \; \text{of catalyst} \; ... \; \text{formula (3)}.$$

As shown in (a) of Fig. 1, the exhaust gas purifying catalyst 10 is preferably configured such that a layer (zeolite layer) having the zeolite 2 supported thereon and a layer (zirconium oxide layer) having the zirconium oxide 1 supported thereon are provided to a substrate 3 in a layered form. With the configuration in which the layer (zeolite layer) formed by causing the zeolite 2 to be supported on the substrate 3 is covered with the layer (zirconium oxide layer) formed by causing the zirconium oxide to be supported on the substrate 3, it is possible to suppress or reduce the phenomenon that a sulfur component (S) is adhered to the zeolite 2 in the exhaust gas purifying catalyst 10. With this, it is possible to enhance the durability of the exhaust gas purifying catalyst 10. Note that the layer being provide to the substrate 3 and having the zeolite 2 supported thereon may contain a zirconium oxide. Meanwhile, the layer having the zirconium oxide supported thereon preferably does not contain the zeolite 2, from the above-described viewpoint.

The exhaust gas purifying catalyst 10 only needs to include the substrate 3 having the zeolite 2 and the zirconium oxide 1 supported thereon. As shown in (b) of Fig. 1, the exhaust gas purifying catalyst 10 may be configured such that the zeolite 2 and the zirconium oxide 1 are directly supported on the substrate 3.

The exhaust gas purifying catalyst 10 only needs to include the substrate 3 having the zeolite 2 and the zirconium oxide 1 supported thereon. As shown in (b) of Fig. 1, the exhaust gas purifying catalyst 10 may be configured such that the layer (zeolite layer) having the zeolite 2 supported thereon and the layer (zirconium oxide layer) having the zirconium oxide 1 supported thereon are directly provided in the substrate 3, instead of the configuration in which these layers are provided to the substrate 3 in a layered form. In other words, the layer (zeolite layer) having the zeolite 2 supported thereon and the layer (zirconium oxide layer) having the zirconium oxide 1 supported thereon may be provided as a single layer in the substrate 3.

The exhaust gas purifying catalyst 10 is a structure constituted by the substrate 3 provided with the layer (zeolite layer) having the zeolite 2 supported thereon and the layer (zirconium oxide layer) having the zirconium oxide 1 supported thereon. The exhaust gas purifying catalyst 10 configured as the above-described structure is practically applicable as an exhaust gas purifying catalyst that is excellent in durability and practicality. The structure may be in the form of a honeycomb structure having a honeycomb shape or in the form of a honeycomb shape constituted only of small corrugated plate pieces, for example. In order to suppress or reduce a pressure drop, the exhaust gas purifying catalyst 10 is more preferably a honeycomb structure that has a honeycomb shape and that is constituted by the substrate 3 provided with the layer (zeolite layer) having the zeolite 2 supported thereon and the layer (zirconium oxide layer) having the zirconium oxide 1 supported thereon.

The layer (zeolite layer) having the zeolite 2 supported thereon and the layer (zirconium oxide layer) having the zirconium oxide 1 supported thereon, which are provided to the substrate 3 of the exhaust gas purifying catalyst 10, may each contain an inorganic binder in order to retain the form and to bond the zeolite 2 and/or the metallic oxide 1 to the substrate 3.

The inorganic binder is not limited to any particular one, provided that it contains a component that would not become a metallic oxide but becomes a zirconium oxide ($ZrO_2$), titania ($TiO_2$), silica ($SiO_2$), or alumina ($Al_2O_3$), each of which may be added as an inorganic binder, after being calcined. Thus, the inorganic binder may be selected from commercially-available ones. For example, the inorganic binder may be a zirconia sol containing a zirconium acetate ($ZrO(C_2H_3O_2)_2$) as a main component. The weight ratio of the inorganic binder contained in the layer (zeolite layer) formed by causing the zeolite 2 to be supported on the substrate 3 is 0.02 to 1.0, relative to 1.0 of the zeolite 2. The weight ratio of the inorganic binder contained in the layer (zirconium oxide layer) formed by causing the zirconium oxide 1 to be supported on the substrate 3 is 0.02 to 1.0, relative to 1.0 of the zirconium oxide 1.

(Exhaust gas)

The exhaust gas is not limited to any particular one, provided that it is an exhaust gas containing a nitrogen oxide (NOx) and a sulfur oxide (SOx). The exhaust gas may be, e.g., an exhaust gas discharged from a diesel engine, an oil burning boiler, a gas turbine, an incinerator for burning waste such as garbage, or the like. For example, the combustion exhaust gas may be an exhaust gas from a marine vessel engine generated as a result of burning of a fuel containing many impurities, such as heavy oil (e.g., heavy oil C). The exhaust gas from the marine vessel engine and the exhaust gas from the incineration facility contain large amounts of nitrogen oxide (NOx) and sulfur oxide (SOx).

An exhaust gas purifying catalyst 10 for purifying the exhaust gas from the marine vessel engine or the like is disposed at a location where the exhaust gas, having discharged from the marine vessel diesel engine and having passed through a supercharger, has a low temperature of approximately 250°C (e.g., 130°C to 300°C). An exhaust gas purifying catalyst 10 for purifying an exhaust gas from the incineration facility or the like is disposed at a location where the exhaust gas, having been discharged from the incinerator for burning waste such as garbage and having passed through a bag filter for exhaust gas processing, has a low temperature of approximately 250°C (e.g., 130°C to 300°C).

The exhaust gas purifying catalyst 10 is designed for an exhaust gas to which at least one of a hydrocarbon and an alcohol is added, and has the substrate 3 provided with the layer (zeolite layer) having the zeolite 2 supported thereon and the layer (zirconium oxide layer) having the zirconium oxide 1 supported thereon. With this, chemical bonding hardly occurs between the exhaust gas purifying catalyst 10 and a sulfur oxide contained in an exhaust gas having a temperature of approximately 130°C to approximately 300°C. Particularly in a case where the zeolite 2 is FER zeolite, chemical bonding hardly occurs between the exhaust gas purifying catalyst 10 and a sulfur oxide (SOx) contained in an exhaust gas having a temperature of 300°C or less.

(Hydrocarbon)

Addition of a hydrocarbon as a reducing agent into an exhaust gas makes it possible to reduce and remove a nitrogen oxide in the exhaust gas on the exhaust gas purifying catalyst for promoting a decomposition reaction of the nitrogen oxide.

The hydrocarbon is not limited to any particular one, but is preferably a $C_{1-5}$ hydrocarbon, more preferably a $C_{1-3}$ hydrocarbon. Particularly preferably, the hydrocarbon is methane, ethane, ethylene, or propane.

(Alcohol)

Addition of an alcohol as a reducing agent into an exhaust gas makes it possible to reduce and remove a nitrogen oxide in the exhaust gas on the exhaust gas purifying catalyst for promoting a decomposition reaction of the nitrogen oxide.

The alcohol is not limited to any particular one, but is preferably a $C_{1-11}$ alcohol, more preferably a $C_{1-5}$ alcohol. The alcohol is preferably an aliphatic alcohol. The aliphatic alcohol may be in a straight-chain form, a branched form, or a cyclic form. Particularly preferably, the aliphatic alcohol is methanol, ethanol, or isopropyl alcohol.

(Substrate)

The substrate 3 may be an inorganic fiber sheet, for example. Examples of the inorganic fiber sheet encompass a glass fiber sheet (glass fiber paper) and a ceramic fiber sheet (ceramic fiber paper). The inorganic fiber sheet may be a flat inorganic fiber sheet or a corrugated inorganic fiber sheet. In a case where the exhaust gas purifying catalyst 10 is a honeycomb structure, the exhaust gas purifying catalyst 10 is preferably a honeycomb structure formed by alternately combining (1) a flat inorganic fiber sheet(s) having the zeolite 2 and the zirconium oxide 1 supported thereon and (2) a corrugated inorganic fiber sheet(s) having the zeolite 2 and the zirconium oxide 1 supported thereon. The exhaust gas purifying catalyst 10 in accordance with an embodiment of the present invention is preferably a honeycomb structure formed by alternately combining (1) an exhaust gas purifying catalyst(s) 10 each including a flat inorganic fiber sheet which is a substrate 3 and which has zeolite 2 and a zirconium oxide 1 supported thereon and (2) an exhaust gas purifying catalyst(s) 10 each including a corrugated inorganic fiber sheet which is a substrate 3 and which has zeolite 2 and a zirconium oxide 1 supported thereon.

(Zeolite layer)

The exhaust gas purifying catalyst 10 can remove a nitrogen oxide ($NO_x$) in the exhaust gas, thanks to the zeolite included therein.

The zeolite 2 is not limited to any particular one, and may be MFI zeolite or FER zeolite, for example.

Preferably, the zeolite 2 has a catalyst metal supported thereon, since such zeolite 2 can enhance the denitration capability. Examples of the catalyst metal encompass bismuth (Bi), silver (Ag), lead (Pb), and cobalt (Co). The weight ratio of the catalyst metal is preferably 1 weight% to 20 weight%, relative to 100 weight% of the exhaust gas purifying catalyst 10.

(Zirconium oxide)

The zirconium oxide 1 is preferably zirconia ($ZrO_2$), and may be a composite oxide of zirconium and other metal(s). The configuration in which the exhaust gas purifying catalyst has the zirconium oxide 1 supported thereon can suppress or reduce the phenomenon that a sulfur (S) component is adhered to the zeolite 2 in the exhaust gas purifying catalyst, thereby making it possible to enhance the durability of the exhaust gas purifying catalyst 10.

The form of the zirconium oxide 1 is not limited to any particular one, provided that the zirconium oxide 1 can be applied to the substrate with it. For example, the zirconium oxide 1 may be in the form of powder or a sol.

<Method for producing exhaust gas purifying catalyst>

The following will describe a method in accordance with an aspect of the present invention for producing an exhaust gas purifying catalyst 10 (shown in (a) of Fig. 1) including a substrate 3 provided with a layer (zeolite layer) having zeolite 2 supported thereon and having two sides respectively provided with layers (zirconium oxide layers) having a zirconium oxide 1 supported thereon. In this case, the method in accordance with the aspect of the present invention for producing the exhaust gas purifying catalyst includes: a zeolite slurry preparing step; a zeolite supporting step; a zirconium oxide slurry preparing step; and a zirconium oxide supporting step. The method in accordance with the aspect of the present invention for producing the exhaust gas purifying catalyst carries out these steps such that, after the layer (zeolite layer) having the zeolite 2 supported thereon is formed, the layer (metallic oxide layer) having the zirconium oxide 1 supported thereon is formed.

In the zeolite slurry preparing step, a zeolite slurry is prepared by adding the zeolite 2 to a solvent. Examples of the solvent encompass ion-changed water, a solvent having one or more alkoxy groups and one or more hydroxy groups, and a solvent and an acid each having two or more hydroxy groups such as ethylene glycol.

In the zeolite slurry preparing step, a catalyst metal and/or an inorganic binder may be further added to the solvent.

In a case where the catalyst metal is added to the solvent, it is preferable to mix the catalyst metal with the solvent prior to addition of the zeolite to the solvent. In a case where the inorganic binder is added to the solvent, it is preferable to add the inorganic binder after heating and stirring the zeolite slurry to which the inorganic binder is not added yet and cooling it to room temperature. The heating temperature is not limited to any particular one, provided that it is a temperature not higher than a boiling point of the solvent. The stirring time only needs to be the one with which the zeolite slurry can be stirred sufficiently. For example, the stirring time is preferably three hours or more. From the viewpoint of working efficiency, the stirring time is preferably 10 hours or less.

The weight ratio between the solvent and the zeolite 2 is preferably 1.0 to 3.0 : 1.0, for example.

The weight of the catalyst metal and the weight of the zeolite 2 may be appropriately adjusted so that, preferably, the weight ratio of the catalyst metal and the weight ratio of the zeolite 2 is 1.0 weight% to 20 weight%, relative to 100 weight% of the exhaust gas purifying catalyst 10.

The weight ratio between the inorganic binder and the zeolite 2 is preferably 0.02 to 1.0 : 1.0, for example.

In the zeolite supporting step, the zeolite slurry prepared in the zeolite slurry preparing step is impregnated in the substrate from its inside to its surface. This causes the zeolite to be supported on the substrate. This step may be carried out by any method, provided that the zeolite slurry can be impregnated in the substrate from its inside to its surface with it. For example, the substrate may be immersed in the zeolite slurry, or the zeolite slurry may be applied onto the surface of the substrate.

In order to evaporate the solvent contained in the zeolite slurry, the zeolite supporting step may include dry processing, for example. The drying temperature is preferably 100°C or higher. The method for the dry processing may be natural drying. By carrying out the dry processing to evaporate the solvent contained in the zeolite slurry, it is possible to form, to the substrate 3, the layer (zeolite layer) having the zeolite supported thereon.

In the zirconium oxide slurry preparing step, a zirconium oxide slurry is prepared by adding the zirconium oxide to a solvent.

The form of the zirconium oxide 1 is not limited to any particular one, provided that the zirconium oxide 1 can be applied to the substrate 3 with it. For example, the zirconium oxide 1 may be in the form of powder or a sol. For example, a substance added as the metallic oxide 1 has a larger particle size than that of a substance added as the inorganic binder.

In the zirconium oxide slurry preparing step, an inorganic binder may be further added to the solvent. In a case where the inorganic binder is added to the solvent, it is preferable to add the inorganic binder after stirring the zirconium oxide slurry to which the inorganic binder is not added yet. The inorganic binder contained in each layer is for bonding the zeolite 2 or the zirconium oxide 1 to the substrate 3. The layer (metallic oxide layer) having the zirconium oxide 1 supported thereon plays a role to suppress or reduce the degradation in the nitrogen-oxide removal capability.

The weight ratio between the solvent and the zirconium oxide is preferably 1.0 to 5.0 : 1.0, more preferably 1.0 to 3.0 : 1.0. Examples of the solvent encompass ion-changed water, a solvent having one or more alkoxy groups and one or more hydroxy groups, and a solvent and an acid each having two or more hydroxy groups such as ethylene glycol.

In the exhaust gas purifying catalyst, the weight ratio of the zirconium oxide may be appropriately adjusted so as to be preferably 0.1 to 1.0, more preferably 0.2 to 1.0, even more preferably 0.3 to 1.0, most preferably 0.33 to 0.95, relative to 1.0 of the layer formed by causing the zeolite to be supported on the substrate 3. Note that the weight of the layer (zeolite layer) formed by causing the zeolite 2 to be supported on the substrate 3 and the weight of the layer (zirconium oxide layer) formed by causing the zirconium oxide 1 to be supported on the substrate 3 can each be obtained by subtracting the weight measured before the layer is formed from the weight measured after the layer is formed.

In the zirconium oxide supporting step, the surface of the substrate having the zeolite supported thereon is covered with the zirconium oxide slurry prepared in the zirconium oxide slurry preparing step, and the substrate covered with the zirconium oxide slurry is subjected to drying and calcination. This causes the zirconium oxide to be supported on the substrate having the zeolite supported thereon.

This step only needs to be capable of covering, with the zirconium oxide slurry, the surface of the substrate having the zeolite supported thereon. The zirconium oxide supporting step may be carried out by immersing, in the zirconium oxide slurry prepared in the zirconium oxide slurry preparing step, the substrate which has undergone the zeolite supporting step and which has the zeolite supported thereon. Alternatively, the zirconium oxide supporting step may be carried out by applying the zirconium oxide slurry onto the surface of the substrate having the zeolite supported thereon.

The drying temperature in the zirconium oxide supporting step is preferably 100°C or more, since it is necessary to evaporate the solvent contained in the zirconium oxide slurry. The drying method in the zirconium oxide supporting step may be natural drying. At the end of the zirconium oxide supporting step, calcination is carried out to evaporate an organic component contained in the substrate 3. In order to get rid of the organic component contained in the substrate 3, the calcination temperature is preferably 400°C to 600°C.

The following will describe a method in accordance with an aspect of the present invention for producing an exhaust gas purifying catalyst (shown in (b) of Fig. 1) constituted by a layer (zeolite layer) having zeolite 2 supported thereon and a layer (zirconium oxide layer) having a zirconium oxide 1 supported thereon that are provided as a single layer in the substrate 3. In this case, the method in accordance with the aspect of the present invention for producing the exhaust gas purifying catalyst includes: a mixed slurry preparing step; and a zeolite-zirconium oxide supporting step.

In the mixed slurry preparing step, a mixed slurry of zeolite and a zirconium oxide is prepared by adding the zeolite and the zirconium oxide to a solvent. Examples of the solvent encompass ion-changed water, a solvent having one or more alkoxy groups and one or more hydroxy groups, and a solvent and an acid each having two or more hydroxy groups such as ethylene glycol.

In the mixed slurry preparing step, a catalyst metal and/or an inorganic binder may be further added to the solvent. The timing and the amount to add each component to the solvent as well as the heating time and the stirring time are the same as those in the zeolite slurry preparing step.

In the zeolite-zirconium oxide supporting step, the mixed slurry prepared in the mixed slurry preparing step is impregnated in the substrate from its inside to its surface, and the substrate containing the mixed slurry is subjected to drying. This causes the zeolite and the zirconium oxide to be supported on the substrate. The method for impregnating the mixed slurry in the substrate from its inside to its surface and the drying temperature are the same as those in the zeolite slurry supporting step. The calcination temperature is the same as that in the zirconium oxide supporting step.

The present invention is not limited to the embodiments, but can be altered by a skilled person in the art within the scope of the claims. The present invention also encompasses, in its technical scope, any embodiment derived by combining technical means disclosed in differing embodiments. Examples

[Example 1]

0.7 g of bismuth nitrate (available from Kishida Chemical Co., Ltd.) was added to 5 g of ion-changed water. To a resultant, 5 g of powdery FER zeolite (available from Zeolyst International) was further added. Consequently, a zeolite slurry to which an inorganic binder was not added yet was prepared. The zeolite slurry to which the inorganic binder was not added yet was stirred at 60°C for three hours, and was cooled to room temperature. Thereafter, 2.3 g of a zirconia sol (available from Daiichi Kigenso Kagaku Kogyo Co., Ltd.) was added thereto as an inorganic binder, and a resultant was stirred. Consequently, a zeolite slurry was prepared. 5.7 g of the zeolite slurry was applied to a cut piece of glass fiber paper having a size of 7.5 cm × 10 cm, and the cut piece of glass fiber paper was dried at 110°C for five minutes. Consequently, the layer (zeolite layer) having the zeolite slurry supported thereon was formed in the glass fiber paper. As a result, the glass fiber paper to which the zeolite slurry was applied was obtained.

Next, 2.5 g of a zirconium oxide (available from Daiichi Kigenso Kagaku Kogyo Co., Ltd.) was added to 5 g of ion-changed water, and a resultant was stirred. Consequently, a zirconia slurry to which an inorganic binder was not added yet was prepared. To the zirconia slurry to which the inorganic binder was not added yet, 1.2 g of a zirconia sol was added as an inorganic binder. Then, a resultant was stirred. Consequently, a zirconium oxide slurry was prepared. 3.1 g of the zirconium oxide slurry was applied to the glass fiber paper to which the zeolite slurry was applied. The glass fiber paper to which the zirconium oxide slurry was applied was dried at 110°C for an hour. Consequently, the glass fiber paper having two sides respectively provided with layers (zirconium oxide layers) having the zirconium oxide slurry supported thereon was prepared. Thereafter, the glass fiber paper was calcined at 500°C for three hours, so that a flat catalyst (exhaust gas purifying catalyst) was obtained.

[Example 2]

A flat catalyst was obtained by the same procedures as in Example 1, except that the applied amounts of the zeolite slurry and the zirconium oxide slurry were doubled and the ion-changed water was replaced with ethylene glycol.

[Example 3]

0.8 g of bismuth nitrate was added to 8.4 g of an ethylene glycol, and 6 g of powdery FER zeolite was further added thereto. Consequently, a mixed slurry to which an inorganic binder was not added yet was prepared. The mixed slurry to which the inorganic binder was not added yet was stirred at 60°C for three hours, and was cooled to room temperature. Thereafter, 3 g of a zirconia sol was added thereto as an inorganic binder, and a resultant was stirred. Consequently, a zeolite slurry was prepared.

Next, 3 g of a zirconium oxide (available from Daiichi Kigenso Kagaku Kogyo Co., Ltd.) was added to 6 g of ethylene glycol, and a resultant was stirred. Consequently, a zirconia slurry to which an inorganic binder was not added yet was prepared. To the zirconia slurry to which the inorganic binder was not added yet, 1.4 g of a zirconia sol was added as an inorganic binder. Then, a resultant was stirred. Consequently, a zirconium oxide slurry was prepared. The zirconium oxide slurry was added to the zeolite slurry, so that a mixed slurry was prepared.

The whole amount of the mixed slurry was applied to a cut piece of glass fiber paper having a size of 7.5 cm $\times$ 10 cm, and the cut piece of glass fiber paper was dried at 110°C overnight. Thereafter, the cut piece of glass fiber paper was calcined at 500°C for three hours. Consequently, a flat catalyst as that shown in (b) of Fig. 1 was obtained.

[Example 4]

A flat catalyst was obtained by the same procedures as in Example 1, except that the applied amount of the zeolite slurry was increased by 1.3 times and the applied amount of the zirconium oxide slurry was increased by 1.5 times.

[Example 5]

A flat catalyst was obtained by the same procedures as in Example 1, except that the applied amount of the zeolite slurry was increased by 1.3 times and the applied amount of the zirconium oxide slurry was increased by 3.0 times.

[Comparative Example 1]

12 g of a zeolite slurry that was the same as that in Example 1 was applied to a cut piece of glass fiber paper having a size of 7.5 cm $\times$ 10 cm, and the cut piece of glass fiber paper was dried at 110°C overnight. Thereafter, the cut piece of glass fiber paper was calcined at 500°C for three hours. Consequently, a flat catalyst as that shown in Fig. 2 was obtained.

(Evaluation of durability)

The capability test was conducted by exposing the flat catalysts obtained in Examples 1 to 5 and Comparative Example 1 to the denitration capability test gas condition indicated in Table 2. For each flat catalyst, an initial denitration rate was obtained by measuring, with an automatic NOx analyzer (available from Anatec Yanako Corporation), a NOx concentration in an exhaust gas before and after setting of the flat catalyst. Note that the flow rate of the exhaust gas was 0.06 Nm$^3$/h.

Next, the capability test was conducted by exposing the flat catalysts obtained in Examples 1 to 5 and Comparative Example 1 to the durability test gas condition indicated in Table 1 for 25 hours and then exposing the flat catalysts to the denitration capability test gas condition indicated in Table 2. For each flat catalyst, a denitration rate after the durability test was obtained by measuring, with the automatic NOx analyzer, a NOx concentration in an exhaust gas before and after setting of the flat catalyst. Note that the flow rate of the exhaust gas was 0.06 Nm$^3$/h.

From the initial denitration rate and the denitration rate after the durability test, a denitration capability retention rate was calculated according to the above-indicated formulae (1) to (3).

[Table 1]

| Durability test gas condition | |
|---|---|
| NO | 1000 ppmvd |
| Air | Balance |
| SO$_2$ | 150 ppmvd |
| SO$_3$ | 20 ppmvd |
| O$_2$ | 14 vol% |
| Moisture | 6 vol% |
| Methanol | 1800 ppmvd |
| Temperature | 250°C |

[Table 2]

| Denitration capability evaluation test gas condition | |
|---|---|
| NO | 1000 ppmvd |
| Air | Balance |
| $O_2$ | 14 vol% |
| Moisture | 6 vol% |
| Methanol | 1800 ppmvd |
| Temperature | 250°C |

[Table 3]

| Durability test results | Initial denitration rate [%] | Denitration rate after durability test [%] | Denitration capability retention rate [-] | Weight ratio of $ZrO_2$ relative to 1 of zeolite |
|---|---|---|---|---|
| Example 1 | 74 | 59 | 0.66 | 0.44 |
| Example 2 | 81 | 73 | 0.79 | 0.33 |
| Example 3 | 73 | 71 | 0.95 | 0.33 |
| Example 4 | 74 | 72 | 0.94 | 0.39 |
| Example 5 | 73 | 72 | 0.94 | 0.95 |
| C. Ex. 1*1 | 81 | 62 | 0.58 | - |
| * 1: "C. Ex." stands for "Comparative Example". | | | | |

As is clear from the results indicated in Table 3, Examples 1 to 5 exhibited higher denitration capability retention rates than Comparative Example 1.

Industrial Applicability

The present invention is applicable to purification of an exhaust gas containing a nitrogen oxide ($NO_x$).

Reference Signs List

1    Zirconium oxide
2    Zeolite
3    Substrate
10    Exhaust gas purifying catalyst

**Claims**

1. An exhaust gas purifying catalyst for promoting a decomposition reaction of a nitrogen oxide in an exhaust gas to which at least one of a hydrocarbon and an alcohol is added, comprising:
a substrate having zeolite and a zirconium oxide supported thereon.

2. The exhaust gas purifying catalyst as set forth in claim 1, wherein a weight ratio of the zirconium oxide is 0.1 to 1.0, relative to 1.0 of the zeolite.

3. The exhaust gas purifying catalyst as set forth in claim 1 or 2, wherein the substrate having at least the zeolite supported thereon has a layer containing the zirconium oxide and not containing the zeolite.

FIG. 1

(a)

(b)

FIG. 2

## INTERNATIONAL SEARCH REPORT

| International application No. |
| --- |
| PCT/JP2020/001110 |

**A. CLASSIFICATION OF SUBJECT MATTER**
Int. Cl. B01J29/69(2006.01)i, B01D53/86(2006.01)i, B01D53/90(2006.01)i, B01D53/94(2006.01)i, F01N3/08(2006.01)i, F01N3/10(2006.01)i, F01N3/28(2006.01)i
FI: B01J29/69 A ZAB, B01D53/86 222, B01D53/90, B01D53/94 222, B01D53/94400, F01N3/08 B, F01N3/10 A, F01N3/28 Q

According to International Patent Classification (IPC) or to both national classification and IPC

**B. FIELDS SEARCHED**

Minimum documentation searched (classification system followed by classification symbols)
Int. Cl. B01J29/69, B01D53/86, B01D53/90, B01D53/94, F01N3/08, F01N3/10, F01N3/28

Documentation searched other than minimum documentation to the extent that such documents are included in the fields searched
Published examined utility model applications of Japan       1922-1996
Published unexamined utility model applications of Japan     1971-2020
Registered utility model specifications of Japan            1996-2020
Published registered utility model applications of Japan    1994-2020

Electronic data base consulted during the international search (name of data base and, where practicable, search terms used)
JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-44157 A (MAZDA MOTOR CORP.) 12 March 2015, claims, example 2, paragraphs [0052]-[0063], fig. 1-3 | 1-3 |
| X | JP 2013-528119 A (BASF SE) 08 July 2013, claims, examples 1-3, paragraphs [0096]-[0099] | 1-3 |
| X | JP 2014-224536 A (BASF CATALYSTS LLC) 04 December 2014, paragraphs [0001], [0019]-[0021], [0053], [0060], [0073], example 1 | 1, 2 |
| A | | 3 |
| X | WO 2015/147257 A1 (HITACHI ZOSEN CORP.) 01 October 2015, example 6, paragraphs [0099]-[0103] | 1, 2 |
| A | | 3 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05.03.2020 | 17.03.2020 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2020/001110

| Patent Documents referred to in the Report | Publication Date | Patent Family | Publication Date |
|---|---|---|---|
| JP 2015-44157 A | 12.03.2015 | US 2015/0251169 A1 claims, example 2, paragraphs [0061]-[0072], fig. 1-3 WO 2015/029382 A1 DE 112014000482 T CN 105263620 A | |
| JP 2013-528119 A | 08.07.2013 | WO 2011/154913 A1 claims, examples 1-3, page 22, line 14 to page 23, line 12 EP 2579985 A1 CN 103052444 A KR 10-2013-0109093 A | |
| JP 2014-224536 A | 04.12.2014 | US 2005/0031514 A1 paragraphs [0001], [0018]-[0020], [0067], example 1 WO 2005/016497 A1 EP 1663458 A1 KR 10-2006-0054423 A CN 1832794 A | |
| WO 2015/147257 A1 | 01.10.2015 | US 2017/0106356 A1 example 6, paragraphs [0101], [0102] EP 3124115 A1 CN 106132540 A KR 10-2016-0140610 A | |

Form PCT/ISA/210 (patent family annex) (January 2015)

## EP 3 912 719 A1

**REFERENCES CITED IN THE DESCRIPTION**

**Patent documents cited in the description**

- JP 2004358454 A